# EUROPÄISCHE PATENTSCHRIFT

(11) **EP 0 363 616 B1**
(45) Veröffentlichungstag und Bekanntmachung des Hinweises auf die Patenterteilung: **29.01.1997**
(21) Anmeldenummer: 89115681.2
(22) Anmeldetag: 25.08.1989
(51) Int. Cl.: G01N 27/406

(54) **Verwendung einer Messsonde für einen Messkopf zur Ermittlung der Sauerstoffaktivität von Metallschmelzen**
Use of a measuring probe for a measuring head to detect the oxygen activity of metal melts
Utilisation d'une sonde de mesure pour tête de mesure pour détecter l'activité d'oxygène des métaux fondus

(30) Priorität: 12.10.1988 US 262735
(43) Veröffentlichungstag der Anmeldung: 18.04.1990
(73) Patentinhaber: ZIRCOA, INC., Solon Ohio 44139 (US)
(72) Erfinder: Beatrice, Pamela, Shaker Height, OH 44120 (US); Johns, Herbert L., Madison, OH 44057 (US); Leistner, Hans, Dr., D-6507 Ingelheim (DE); Proch, Ronne D., Chagrin Falls, OH 44022 (US); Wright, James R., Bedford, OH 44146 (US)
(74) Vertreter: Brückner, Raimund, Dipl.-Ing.

(56) Entgegenhaltungen:
- EP-A- 0 059 222
- DE-A- 2 900 069
- US-A- 4 318 770
- US-A- 4 493 746
- STAHL UND EISEN, Band 95, Nr. 22, 23. Oktober 1975, Seite 1084; "Sauerstoffmesssonde FOX für Stahlschmelzen"
- STAHL UND EISEN, Band 98, Nr. 16, 10. August 1978, Seiten 825-829; D. JANKE et al.: "Eine neue Tauchsonde zur elektrochemischen Schnellbestimmung des gelösten Sauerstoffs in Metallschmelzen"

## Beschreibung

Die Erfindung bezieht sich auf die Verwendung einer Meßsonde für einen Meßkopf zur Ermittlung der Sauerstoffaktivität von Metallschmelzen, insbesondere Stahlschmelzen, bei welchem die Meßsonde eine Vergleichssubstanz bekannter Sauerstoffaktivität aufweist, welche beim Eintauchen in die Metallschmelze durch einen bei höheren Temperaturen überwiegend sauerstoffleitenden und vernachlässigbar elektronenleitenden feuerfesten Feststoffelektrolyten von der Metallschmelze getrennt ist und die Messung der elektromotorischen Kraft zwischen der Vergleichssubstanz und einem mit der Metallschmelze in Berührung stehenden Badkontakt gestattet, und wobei der Feststoffelektrolyt eine durch mechanische Bearbeitung oder durch ein Ätzverfahren erhältliche, gereinigte und unbeschichtete Oberfläche aufweist.

Aus der US-PS 4,318,770 ist ein derartiger Meßkopf bekannt, wobei zur besseren Haftung eines später aufzudampfenden Materials oder einer sonstigen Beschichtung die Porosität der Elektrodenoberfläche durch Ätzung mittels konzentrierter Säuren erhöht wird.

Die nachträgliche Oberflächenbeschichtung erfordert aber einen verhältnismäßig hohen Herstellungsaufwand, was die Kosten für die Meßsonde erhöht. Außerdem leiden die Schichten unter dem Angriff der Metallschmelze, so daß ihre Wirksamkeit beschränkt ist.

Aufgabe der vorliegenden Erfindung ist es, die Verwendung einer Meßsonde für einen Meßkopf zur Ermittlung der Sauerstoffaktivität von Metallschmelzen der eingangs genannten Art vorzuschlagen, bei welcher die Sauerstoffkonzentration mit größerer Genauigkeit gemessen werden kann.

Diese Aufgabe wird mit der Erfindung im wesentlichen dadurch gelöst, daß die gereinigte Oberfläche direkt mit der Metallschmelze in Kontakt gebracht wird.

Auf diese Weise wird überraschenderweise eine Meßsonde geschaffen, mit welcher bei verbesserter Ansprechzeit bis in einen Bereich 0 bis 20 ppm Sauerstoffkonzentration mit erhöhter Genauigkeit gemessen werden kann.

Die Oberflächenreinigung kann durch ein Ätzverfahren mittels Säuren oder durch eine mechanische Bearbeitung mittels Abblasen (Sandstrahlen) erreicht werden, wobei das Ätzverfahren das einfachste und wirkungsvollste ist.

Das Ätzverfahren wird vorteilhaflerweise mittels einer Fluorwasserstoffsäure ausgeführt. Die Fluorwasserstoffsäure hat dabei vorzugsweise eine Konzentration zwischen 0,5 und 50 %. Dieses Ätzverfahren kann man beispielsweise bei Raumtemperatur ausführen, wofür zweckmäßigerweise eine Dauer zwischen etwa 5 und 60 Minuten angesetzt wird.

Nach dem Ätzverfahren sollte die gereinigte Oberfläche des Feststoffelektrolyten mit deionisiertem Wasser und gegebenenfalls einer Benzethoniumchlorid-Lösung abgewaschen und anschließend bei erhöhter Temperatur getrocknet werden.

In diesem Zusammenhang wird gemäß einem weiteren Erfindungsmerkmal vorgeschlagen, bei der Oberflächenreinigung eine Oberflächenschicht des Feststoffelektrolyten in der Größenordnung von 0,5 bis 10 mm abzutragen.

Als Feststoffelektrolyt sollte vorzugsweise ein Material verwendet werden, was im wesentlichen aus ZrO₂ besteht und vorzugsweise über 95 Gew.-% ZrO2 enthält. Zur Stabilisierung des ZrO₂ kommt MgO infrage. Dies sollte in dem Feststoffelektrolyten mit etwa 3 Gew.-% enthalten sein. Ferner sollte der Feststoffelektrolyt unter 1 Gew.-% pyrogene Kieselsäure (SFH) enthalten.

Besonders gute Ergebnisse bei der Herstellung einer Meßsonde für hohe Meßgenauigkeit wird dann erreicht, wenn der Feststoffelektrolyt etwa
0,40 - 1,2 Gew.-% SiO₂
max. 0,40 Gew.-% CaO
2,0 -3,5 Gew.-% MgO
max. 0,40 Gew.-% Fe₂O₃
max. 0,40 Gew.-% Al₂O₃
max. 0,25 Gew.-% TiO₂
enthält.

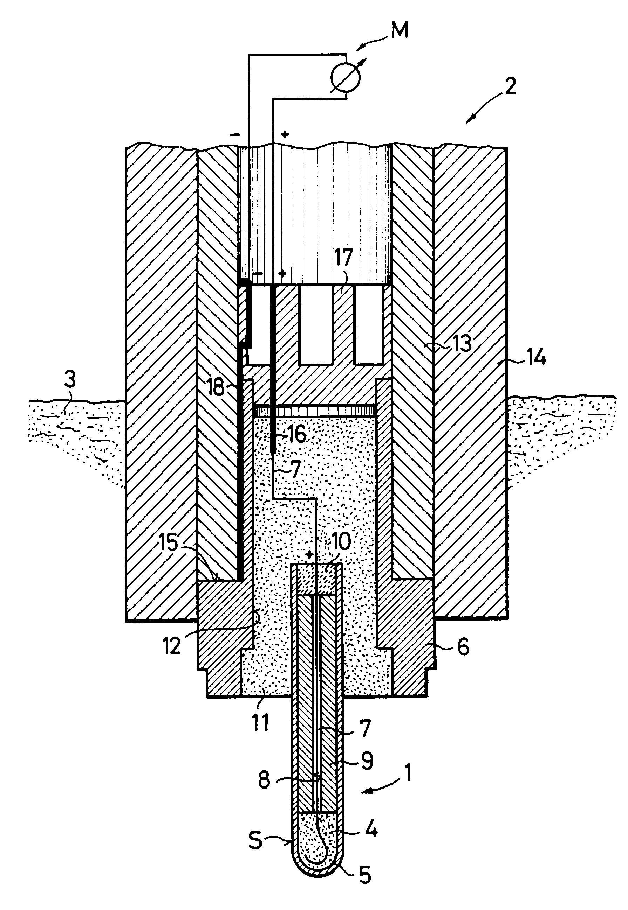

Weitere Ziele, Merkmale, Vorteile und Anwendungsmöglichkeiten der vorliegenden Erfindung ergeben sich aus der nachfolgenden Beschreibung von Ausführungsbeispielen und der Zeichnung.

Die einzige Figur veranschaulicht im Schnitt einen Meßkopf zur Ermittlung der Sauerstoffaktivität von Metallschmelzen.

Die Meßsonde 1 ist Bestandteil eines Meßkopfes 2, welcher zur Ausführung der Ermittlung der Sauerstoffaktivität (des Sauerstoffpartialdruckes) einer Metallschmelze 3 in diese eingetaucht wird.

Die Meßsonde 1 weist dabei ein einseitig im Bereich der Metallschmelze 3 geschlossenes Röhrchen aus einem bei den höheren Temperaturen der Metallschmelze überwiegend sauerstoffleitenden, aber vernachlässigbar elektronenleitenden feuerfesten Feststoffelektrolyten 5 auf der Basis eines mit MgO stabilisierten ZrO₂ auf. In dem in der Zeichnung unteren Bereich des Röhrchens ist eine Pulvermischung aus Cr/Cr₂O₃ als Vergleichssubstanz 4 bekannter Sauerstoffaktivität enthalten. Die Vergleichssubstanz 4 steht mit eineim Draht 7 aus Molybdän in Verbindung, welcher durch die zentrale Bohrung 8 einer innerhalb des Röhrchens oberhalb der Vergleichssubstanz 4 angeordneten Stützhülse 9 nach oben aus dem Röhrchen herausgeführt ist. Die Stützhülse 9 ist mit einer Verschlußmasse 10 in dem Röhrchen gehalten. Die Meßsonde 1 ist mit ihrem oberen Abschnitt in einer feuerfesten Masse 11, beispielsweise einem feuerfesten Zement, in dem unteren Abschnitt des Innenraums 12 eines als Trägerhülse ausgebildeten Badkontakts 6 eingebettet, welcher beispielsweise aus einer graphithaltigen feuerfesten Masse vorzugsweise aut der Basis von Korund, Mullit, Schamotte oder dergleichen, in seine Form gepreßt und gebrannt ist. Vorteilhafte Eigenschaften des Badkontaktes 6 ergeben sich insbesondere aus der DE-PS 33 45 540. Der als Trägerhülse ausgebildete Badkontakt 6 steckt mit einem oberen verjüngten Ende in einem beispielsweise aus Pappe bestehenden Lanzenrohr 13, welches jedenfalls in dem in die Metallschmelze 3 hineinragenden Abschnitt mit einem Schutzrohr 14 aus feuerfestem material umgeben ist. Der untere Abschnitt des Stützrohres 14 ragt dabei bis über die Trennfuge 15 zwischen der nach unten weisenden Stirnfläche des Lanzenrohrs 13 und der an dieser Stelle vorgesehenen Schulter des Badkontaktes 6. Der Draht 7 aus Molybdän steht mit einem Anschlußkontakt 16 einer Anschlußbasis 17 aus nichtleitendem Material, wie Kunststoff, in Leitungsverbindung, Der als Trägerhülse ausgebildete Badkontakt 6 ist außen ebenfalls mit einem Anschlußkontakt 18 versehen, welcher bis in die Anschlußbasis 17 geführt ist, so daß dort mit einem (nicht dargestellten) Stecker ein Meßanschluß zu einem Meßgerät M zur Messung der elektromotorischen Kraft zwischen Vergleichssubstanz 4 und Badkontakt 6, und damit der Sauerstoffaktivität (des Sauerstoffpartialdruckes) der Metallschmelze hergestellt werden kann, in welche der Meßkopf 2 eintaucht.

Die Oberfläche S des als unten geschlossenes Röhrchen ausgebildeten Feststoffelektrolyten 5 wird erfindungsgemäß einer Oberflächenreinigung, beispielsweise in einem Ätzverfahren mittels 0,5 bis 50 %iger Fluorwasserstoffsäure gereinigt. Fotografische Untersuchungen haben dabei ergeben, daß der nicht behandelte Feststoffelektrolyt 5 ein verhältnismäßig glattes Gefüge zeigt, während nach dem Ätzen die tetragonale Phase der Oberfläche des ZrO₂ deutlich hervortrat. Hierauf ist offensichtlich die überraschende Wirkung der erhöhten Meßgenauigkeit zurückzuführen, welche mit der erfindungsgemäß präparierten Meßsonde 1 bis hinunter in einem Bereich von 0 bis 20 ppm Sauerstoffkonzentration erreicht werden kann verbunden mit einer verbesserten Ansprechzeit.

Die beste Meßgenauigkeit wurde mit einem Feststoffelektrolyten 5 erzielt, welcher mehr als 95 Gew.-% ZrO₂, etwa 3 Gew.-% MgO, etwa 0,5 Gew.-% SiO₂ enthielt.

Nach der bevorzugten Analyse enthielt der Feststoffelektrolyt
0,40 - 1,2 Gew.-% SiO₂
max. 0,40 Gew.-% CaO
2,0 - 3,5 Gew.-% MgO
max. 0,40 Gew.-% Fe₂O₃
max. 0,40 Gew.-% Al₂O₃
max. 0,25 Gew.-% TiO₂.

Erfindungsgemäße Ätzverfahren wurden mit positiven Versuchsergebnissen einer verbesserten Meßgenauigkeit wie folgt ausgeführt:

Verwendung einer Ätzlösung von 49 % HF in einem becherförmigen Behälter, welcher in einem keramischen Tiegel und dieser wiederum in einer Wasserwanne angeordnet war. Die Temperatur der Lösung lag bei Raumtemperatur von etwa 21 °C. Die Ätzdauer betrug 10 Minuten. Nach dem Abgießen der Fluorwasserstoffsäure wurde die geätzte Oberfläche des röhrchenförmigen Feststoffelektrolyten 5 dreimal mit deionisiertem Wasser, dann zweimal mit Hyamin-Lösung und schließlich noch zweimal mit deionisiertem Wasser abgespült. Danach wurde die äußere Oberfläche des röhrchenförmigen Feststoffelektrolyten 5 mit einem Tuch abgetrocknet und das Innere des Röhrchens mit einem Pfeifenreiniger gereinigt. Danach wurde das so geätzte Feststoffelektrolyt-Röhrchen 5 in einem Heizofen 10 Minuten lang bei 160 °C getrocknet.

### Beispiel

Zur Herstellung von Meßsonden (Sensoren) aus teilstabilisiertem Zirkoniumoxid wurde monoklines Zirkoniumoxid mit weniger als 0,25 % SiO₂-Gehalt und mit einer Körnung unter 10 µm verwendet. Es wurde eine Mischung hergestellt aus 96,25 Gew.-% Zirkoniumoxid, 3,1 Gew.-% pulverigem Magnesiumhydroxid und 0,65 Gew.-% pyrogenem Siliciumdioxid mit einer Korngröße 70 % unter 5 µm. Die Mischung wurde unter Zusatz von 0,6 Gew.-% Natriumpolymethacrylacrylat (sodium Polymethacrylate) als Dispergiermittel, 3,3 Gew.-% Polyvinyl Alcoholharz (Polyvinyl Alcohol Resin) und Wasser zu einer keramischen Suspension verarbeitet. Die keramische Suspension wurde in üblicher Weise mit einer Vibrationsmühle bis zur eine mittlere Korngröße von 2 bis 3 µm gemahlen (gemessen als mittlere volumenbezogene Korngröße nach dem Verfahren der Beugung eines Laserlichtstrahles). Aus der keramischen Suspension (keramischer Schlicker) wurde anschließend duren Sprühtrocknung ein preßfähiges Granulat hergestellt. Aus dem Granulat wurden durch isostatisches Pressen (Verfahren: dry bag isostatic pressing) Meßsonden hergestellt, die bei 1785 °C / 2 Stunden gebrannt wurden.

Es wurden dichte Meßsonden aus teilstabilisiertem Zirkoniumdioxid mit etwa 50 % monoklinem Zirkoniumdioxid erhalten. Die chemische Analyse der gebrannten Meßsonden ergab außer ZrO₂ nach der Atom-Absorptions-Analyse (atomic absorption analysis):

| | |
|---|---|
| MgO | 2,98 Gew.-%, |
| SiO₂ | 0,65 Gew.-%, |
| CaO | 0,24 Gew.-%, |
| Al₂O₃ | 0,10 Gew.-%, |
| Fe₂O₃ | 0,07 Gew.-%, |
| TiO₂ | 0,05 Gew.-%. |

Die Oberflächen der Meßkörper wurden durch Ätzen mit Säure behandelt und aktiviert. Es wurde HF in 49 %iger Konzentration über einen Zeitraum von 10 Minuten eingesetzt. Die Meßkörper wurden während dieser Zeit bei Umgebungstemperatur mit der Ätzlösung in einem Plastikgefäß durch Schütteln oder Rollen bewegt. Die Behandlung der Oberfläche der Meßkörper kann auch mit HF in geringerer Konzentration, z.B. mit HF in 2 %iger Konzentration, über einen Zeitraum von 40 Minuten vorgenommen werden.

Nach der Behandlung der Oberfläche der Meßkörper durch das Ätzen wurden die Meßkörper aus der Ätzflüssigkeit herausgenommen und 5 mal mit deionisiertem Wasser gesäubert, gespült und getrocknet. Die Abnahme der Wandstärke der Meßkörper wurde rechnerisch bestimmt aus dem Gewichtsverlust der Meßkörper durch das Ätzen, der Oberfläche und dem spezifischen Gewicht der Meßkörper. Es wurde nach der Ätzung mit 49 %iger HF eine Abnahme der Wandstärke von 5,8 µm gefunden.

Die Meßkörper mit behandelter Oberfläche nach dem Beispiel führten beim Einsatz zur Messung der Sauerstoffkonzentration in aluminiumberuhigter Stahlschmelze bei Temperaturen von 1540 und 1620 °C zu einwandfreien Werten im Bereich von 0 bis 20 ppm bei zugleich kurzer Ansprechzeit .

### Bezugszeichenliste - reference numerals

- 1: Meßsonde - measuring probe
- 2: Meßkopf - measuring head
- 3: Metallschmelze - metal melt
- 4: Vergleichssubstanz - reference substance
- 5: Feststoffelektrolyt - sold electrolyte
- 6: Badkontakt - bath contact
- 7: Draht - wire
- 8: Bohrung - bore
- 9: Stützhülse - supporting sleave
- 10: Verschlußmasse - locking batch
- 11: feuerfeste Masse - refractory substance
- 12: Innenraum - interior
- 13: Lanzenrohr - lance tube
- 14: Schutzrohr - protection tube
- 15: Trennfuge - separating line
- 16: Anschlußkontakt - connection contact
- 17: Anschlußbasis - connection support
- 18: Anschlußkontakt - connection contact

- M: Meßinstrument - measuring instrument
- S: Oberfläche - surface

## Patentansprüche

1. Verwendung einer Meßsonde (1) für einen Meßkopf (2) zur Ermittlung der Sauerstoffaktivität von Metallschmelzen (3), insbesondere Stahlschmelzen, bei welchem die Meßsonde (1) eine Vergleichssubstanz (4) bekannter Sauerstoffaktivität aufweist, welche beim Eintauchen in die Metallschmelze (3) durch einen bei höheren Temperaturen überwiegend sauerstoffleitenden und vernachlässigbar elektronenleitenden feuerfesten Feststoffelektrolyten (5) von der Metallschmelze (3) getrennt ist und die Messung der elektromotorischen Kraft zwischen der Vergleichssubstanz (4) und einem mit der Metallschmelze (3) in Berührung stehenden Badkontakt (6) gestattet, und wobei der Feststoffelektrolyt (5) eine durch mechanische Bearbeitung oder durch ein Ätzverfahren erhältliche, gereinigte und unbeschichtete Oberfläche (S) aufweist,
dadurch gekennzeichnet,
daß die Oberfläche (S) der Meßsonde (1) direkt mit der Metallschmelze (3) in Kontakt gebracht wird.

2. Verwendung einer Meßsonde (1) nach Anspruch 1,
dadurch gekennzeichnet,
daß die Oberfläche (S) des Feststoffelektrolyten (5) durch Abblasen, z.B. Sandstrahlen, gereinigt wurde.

3. Verwendung einer Meßsonde (1) nach Anspruch 1,
dadurch gekennzeichnet,
daß die Oberfläche (S) des Feststoffelektrolyten (5) durch ein Ätzverfahren mittels einer Säure gereinigt wurde.

4. Verwendung einer Meßsonde (1) nach Anspruch 3,
dadurch gekennzeichnet,
daß als Säure Fluorwasserstoffsäure verwendet wurde.

5. Verwendung einer Meßsonde (1) nach Anspruch 4,
dadurch gekennzeichnet,
daß als Fluorwasserstoffsäure eine solche mit einer Konzentration zwischen etwa 0,5 und 50 % verwendet wurde.

6. Verwendung einer Meßsonde (1) nach den Ansprüchen 1, 3, 4 oder 5,
dadurch gekennzeichnet,
daß das Ätzverfahren bei Raumtemperatur ausgeführt wurde.

7. Verwendung einer Meßsonde (1) nach den Ansprüchen 1 oder 3 bis 6,
dadurch gekennzeichnet,
daß ein Ätzverfahren von etwa 5 bis 60 Minuten Dauer durchgeführt wurde.

8. Verwendung einer Meßsonde (1) nach den Ansprüchen 1 oder 3 bis 7,
dadurch gekennzeichnet,
daß nach dem Ätzverfahren die gereinigte Oberfläche (S) des Feststoffelektrolyten (5) mit deionisiertem Wasser und gegebenenfalls einer Benzethoniumchlorid-Lösung abgewaschen und anschließend bei gegenüber Raumtemperatur erhöhter Temperatur getrocknet wurde.

9. Verwendung einer Meßsonde (1) nach den Ansprüchen 1 bis 8,
dadurch gekennzeichnet,
daß bei der Oberflächenreinigung eine Oberflächenschicht des Feststoffelektrolyten (5) in der Größenordnung von 0,2 bis 10 µm abgetragen wurde.

10. Verwendung einer Meßsonde (1) nach Anspruch 1,
dadurch gekennzeichnet,
daß der Feststoffelektrolyt (5) im wesentlichen aus ZrO₂ besteht.

11. Verwendung einer Meßsonde (1) nach Anspruch 10,
dadurch gekennzeichnet,
daß der Feststoffelektrolyt (5) über 95 Gew.-% ZrO₂ enthält.

12. Verwendung einer Meßsonde (1) nach Anspruch 11,
dadurch gekennzeichnet,
daß der Feststoffelektrolyt (5) etwa 3 Gew.-% MgO enthält.

13. Verwendung einer Meßsonde (1) nach Anspruch 11 oder 12,
dadurch gekennzeichnet,
daß der Feststoffelektrolyt (5) unter 1 Gew.-% pyrogene Kieselsäure enthält.

14. Verwendung einer Meßsonde nach Anspruch 11,
dadurch gekennzeichnet,
daß der Feststoffelektrolyt (5) etwa
0,40 - 1,2 Gew.-% SiO₂
max. 0,40 Gew.-% CaO
2,0 -3,5 Gew.-% MgO
max. 0,40 Gew.-% Fe₂O₃
max. 0,40 Gew.-% Al₂O₃
max. 0,25 Gew.-% TiO₂
enthält.

## Claims

1. Use of a measuring probe (1) for a measuring head (2) for determining the oxygen activity of molten metals (3), particularly molten steels, in which the measuring probe (1) has a reference substance (4) of known oxygen activity which, when immersed in the molten metal (3), is separated from the molten metal (3) by a refractory solid electrolyte (5) which, at relatively high temperatures, is predominantly oxygen-conductive and negligibly electron-conductive, and permits the measurement of the electromotive force between the reference substance (4) and a bath contact (6) and wherein the solid electrolyte (5) has a cleaned and uncoated surface (S) obtainable by mechanical processing or by an etching process, characterised in that the surface (S) of the measuring probe (1) is brought directly into contact with the molten metal.

2. Use of a measuring probe (1) as claimed in Claim 1, characterised in that the surface (S) of the solid electrolyte (5) was cleaned by blasting, e.g. sandblasting.

3. Use of a measuring probe (1) as claimed in Claim 1, characterised in that the surface (S) of the solid electrolyte (5) was cleaned by an etching process by means of an acid.

4. Use of a measuring probe (1) as claimed in Claim 3, characterised in that hydrofluoric acid was used as the acid.

5. Use of a measuring probe (1) as claimed in Claim 4, characterised in that the hydrofluoric acid was used with a concentration between about 0.5 and 50%.

6. Use of a measuring probe (1) as claimed in Claims 1, 3, 4 or 5, characterised in that the etching process was performed at room temperature.

7. Use of a measuring probe (1) as claimed in Claims 1 or 3 to 6, characterised in that an etching process of about 5 to 60 minutes duration was performed.

8. Use of a measuring probe (1) as claimed in Claims 1 or 3 to 7, characterised in that after the etching process the cleaned surface (S) of the solid electrolyte (5) was washed off with deionized water and optionally a benzethonium chloride solution and was subsequently dried at a temperature above room temperature.

9. Use of a measuring probe (1) as claimed in Claims 1 to 8, characterised in that in the surface cleaning a surface layer of the solid electrolyte (5) of the order of 0.2 to 10 µm was removed.

10. Use of a measuring probe (1) as claimed in Claim 1, characterised in that the solid electrolyte (5) consists substantially of ZrO₂.

11. Use of a measuring probe (1) as claimed in Claim 10, characterised in that the solid electrolyte (5) contains more than 95 wt.% ZrO₂.

12. Use of a measuring probe (1) as claimed in Claim 11, characterised in that the solid electrolyte (5) contains about 3 wt.% MgO.

13. Use of a measuring probe (1) as claimed in Claim 11 or 12, characterised in that the solid electrolyte (5) contains less than 1 wt.% pyrogenic silica.

14. Use of a measuring probe as claimed in Claim 11, characterised in that the solid electrolyte (5) contains approximately
0.4 - 1.2 wt.% SiO₂
at most 0.40 wt.% CaO
2.0 - 3.5 wt.% MgO
at most 0.40 wt.% Fe₂O₃
at most 0.40 wt.% Al₂O₃
at most 0.25 wt.% TiO₂.

## Revendications

1. Utilisation d'une sonde de mesure (1) pour une tête de mesure (2) pour la détermination de l'activité d'oxygène de métaux en fusion (3), en particulier d'acier en fusion, dans laquelle la sonde de mesure (1) comporte une substance de référence (4) ayant une activité d'oxygène connue, laquelle substance, lorsqu'on la plonge dans le métal en fusion (3), est séparée du métal en fusion (3) par un électrolyte solide (5) réfractaire qui, à température élevée, conduit principalement l'oxygène et a une conductivité électronique négligeable, et qui permet la mesure de la force électromotrice entre la substance de référence (4) et une substance (6) en contact avec le bain de métal fondu (3), et où l'électrolyte solide (5) présente une surface (S) non enduite, nettoyée par un traitement mécanique ou un procédé de décapage,
caractérisée en ce que la surface (S) de la sonde de mesure (1) est directement mise en contact avec le métal en fusion (3).

2. Utilisation d'une sonde de mesure (1) conforme à la revendication 1, caractérisée en ce que la surface (S) de l'électrolyte solide (5) a été nettoyée par projection de particules, par exemple par sablage.

3. Utilisation d'une sonde de mesure (1) conforme à la revendication 1, caractérisée en ce que la surface (S) de l'électrolyte solide (5) a été nettoyée par un procédé de décapage utilisant un acide.

4. Utilisation d'une sonde de mesure (1) conforme à la revendication 3, caractérisée en ce que l'acide utilisé est l'acide fluorhydrique.

5. Utilisation d'une sonde de mesure (1) conforme à la revendication 4, caractérisé en ce que l'on utilise, comme acide fluorhydrique, un acide ayant une concentration comprise entre environ 0,5 et 50 %.

6. Utilisation d'une sonde de mesure (1) conforme aux revendications 1, 3, 4 ou 5, caractérisée en ce que le procédé de décapage a été effectué à température ambiante.

7. Utilisation d'une sonde de mesure (1) conforme aux revendications 1 ou 3 à 6, caractérisée en ce que le procédé de décapage a duré entre environ 5 et 60 minutes.

8. Utilisation d'une sonde de mesure (1) conforme aux revendications 1 ou 3 à 7, caractérisée en ce que, après décapage, la surface nettoyée a été lavée avec de l'eau désionisée et éventuellement avec une solution de chlorure de benzéthonium et séchée à une température supérieure à la température ambiante.

9. Utilisation d'une sonde de mesure (1) conforme aux revendications 1 à 8, caractérisé en ce que le nettoyage de la surface se traduit par l'enlèvement d'une couche superficielle d'électrolyte solide de l'ordre de 0,2 à 10 µm.

10. Utilisation d'une sonde de mesure (1) conforme à la revendication 1, caractérisée en ce que l'électrolyte solide (5) est composé essentiellement de ZrO₂.

11. Utilisation d'une sonde de mesure (1) conforme à la revendication 10, caractérisée en ce que l'électrolyte solide (5) contient plus de 95 % en poids de ZrO₂.

12. Utilisation d'une sonde de mesure (1) conforme à la revendication 11, caractérisée en ce que l'électrolyte solide (5) contient environ 3 % en poids de MgO.

13. Utilisation d'une sonde de mesure (1) conforme à la revendication 11 ou 12, caractérisée en ce que l'électrolyte (5) contient moins de 1 % en poids d'acide silicique pyrogène.

14. Utilisation d'une sonde de mesure conforme à la revendication 11, caractérisée en ce que l'électrolyte solide (5) contient environ
0,40 - 1,2 % en poids de SiO₂,
au plus 0,40 % en poids de CaO,
2,0 à 3,5 % en poids de MgO,
au plus 0,40 % en poids de Fe₂O₃,
au plus 0,40 % en poids d'Al₂O₃,
au plus 0,25 % en poids de TiO₂.
